# EUROPEAN PATENT APPLICATION

(11) **EP 4 850 533 A1**
(43) Date of publication of application: **09.12.2026**
(21) Application number: 25748168.9
(22) Date of filing: 28.01.2025
(51) Int. Cl.: A21C 9/06, A21C 11/04, A21C 11/08, A23P 20/20

(54) **DUMPLING PRODUCT SHAPING DEVICE**

(30) Priority: 29.01.2024 JP 2024010723
(71) Applicant: AJINOMOTO CO., INC., Chuo-ku Tokyo 104-8315 (JP)
(72) Inventor: YAMADA, Ayato, Kawasaki-shi, Kanagawa 210-8681 (JP); TOYAMA, Suguru, Kawasaki-shi, Kanagawa 210-8681 (JP)
(74) Representative: Strehl & Partner mbB
(86) International application number: PCT/JP2025/002502
(87) International publication number: WO 2025/164586

(57) **Abstract**

The present invention provides a filled food product-forming apparatus having a roller section composed of two rollers, wherein the two rollers rotate in mutually opposite directions while being in face-to-face contact at cylindrical roll portions, and a filled food product having bulging portions on both sides is formed by rotation of the two rollers, wherein
each of the two rollers has recesses for accommodating the bulging portion of the filled food product at one or more positions facing each other during rotation of the rollers, one of the two rollers has ventilation holes for sending air to each recess, and
an air nozzle for sending air is provided at an outlet for the formed filled food product from the roller section.

## Description

### [Technical Field]

The present invention relates to a filled food product-forming apparatus and the like for forming filled food products having bulging portions on both sides.

### [Background Art]

In a conventional filling machine (filled food product-forming apparatus) that forms a filled food product such as gyoza by rotation of two rollers that rotate in mutually opposite directions while being in face-to-face contact at cylindrical roll portions, one side of the roller is flat, and a scraper for detaching the formed filled food products is installed at a formed filled food products take-out portion (for example, Patent Literature 1 and the like). By using the conventional filling machine, a conventional filled food products such as gyoza having a bulging portion only on one side are obtained.

On the other hand, when producing a gyoza having bulging portions on both sides, it is necessary to provide recesses on both sides of the rollers of the forming apparatus. In this case, however, a scraper for detaching cannot be used, and detaching of the formed filled food products from the rollers is difficult.

Patent Literature 2 also discloses a filling mechanism using rollers, but the food to be filled in Patent Literature 2 is filled pasta. Pasta is hard in most cases because the dough does not contain water and contains eggs, and can be detached only by air from the inside of the rollers. In the case of, for example, a gyoza, since the dough is hydrated (20 to 50% relative to the dough), the gyoza has strong adhesiveness and is difficult to detach from the rollers.

### [Citation List]

### [Patent Literature]

[Patent Literature 1]
   JP 4-144671 A
[Patent Literature 2]
   JP 2020-508647 A

### [Summary of Invention]

### [Technical Problem]

The present invention has been made in view of the aforementioned circumstances, and an object thereof is to provide a filled food product-forming apparatus and the like capable of easily detaching filled food products, such as gyoza, having bulging portions on both sides after formation thereof.

### [Solution to Problem]

The present inventors have conducted intensive studies of the above-mentioned problem and found that, by configuring a filled food product-forming apparatus comprising a roller section that forms a filled food product by rotation of two rollers that rotate in mutually opposite directions while being in face-to-face contact at cylindrical roll portions, such that each roller has recesses for accommodating a bulging portion of a filled food product having bulging portions on both sides at positions facing each other during rotation of the rollers, one of the rollers has ventilation holes for sending air to each recess, and an outlet for the formed filled food products from the roller section has an air nozzle for sending air, the formed filled food product can be easily detached from the roller section. Based on such finding, they have conducted further studies and completed the present invention.

Accordingly, the present invention provides the following.
[1] A filled food product-forming apparatus having a roller section composed of two rollers, wherein the aforementioned two rollers rotate in mutually opposite directions while being in face-to-face contact at cylindrical roll portions, and a filled food product having bulging portions on both sides is formed by rotation of the aforementioned two rollers, wherein each of the aforementioned two rollers has recesses for accommodating the aforementioned bulging portion of the aforementioned filled food product at one or more positions facing each other during rotation of the rollers,
   one of the aforementioned two rollers has ventilation holes for sending air to each recess, and
   an air nozzle for sending air is provided at an outlet for the aforementioned formed filled food product from the aforementioned roller section.
[2] The apparatus of the above-mentioned [1], wherein the ventilation holes provided in each recess of one of the aforementioned two rollers are configured to send air to the aforementioned each recess only when the recesses of the aforementioned two rollers face each other during rotation of the aforementioned two rollers.
[3] The apparatus of the above-mentioned [1] or [2], wherein one or more of the two rollers are connected to a rotating portion of a rotary joint attached to a side surface of the aforementioned roller.
[4] The apparatus of the above-mentioned [3], wherein the ventilation holes provided in the roller having ventilation holes for sending air to each recess are connected to the rotating portion of the rotary joint.
[5] The apparatus of any of the above-mentioned [1] to [4], wherein a line connecting the respective center points of the two rollers is inclined at an angle of 30 to 60° from the vertical direction, and the roller having ventilation holes for sending air to each recess is configured to be positioned on the lower side.
[6] The apparatus of any of the above-mentioned [1] to [5], wherein the filled food product comprises at least a filling and an outer skin covering the filling, and the outer skin contains 15 wt% to 50 wt% moisture.
[7] The apparatus of any of the above-mentioned [1] to [6], wherein the filled food product is a gyoza.
[8] A method for producing a filled food product having bulging portions on both sides, comprising a step of by using the apparatus of any of the above-mentioned [1] to [5], sending air to the aforementioned formed filled food product having bulging portions on both sides from the ventilation hole provided in each recess of one of the two rollers, and sending air from the air nozzle provided at the outlet for the formed filled food product from the roller section.
[9] The production method of the above-mentioned [8], wherein an amount of air sent when sending air from the ventilation hole provided in each recess of one of the two rollers is 1 L/min/g of the filled food product to 2 L/min/g of the filled food product, and an amount of air sent when sending air from the air nozzle is 6 L/min/g of the filled food product to 12 L/min/g of the filled food product.
[10] The production method of the above-mentioned [8] or [9], wherein the filled food product has at least a filling and an outer skin covering the filling, and the outer skin contains 15 wt% to 50 wt% moisture.
[11] The production method of any of the above-mentioned [8] to [10], wherein the filled food product is a gyoza.

### [Advantageous Effects of Invention]

According to the present invention, filled food products, such as gyoza, having bulging portions on both sides can be easily detached after formation thereof.

### [Brief Description of Drawings]

[Fig. 1]

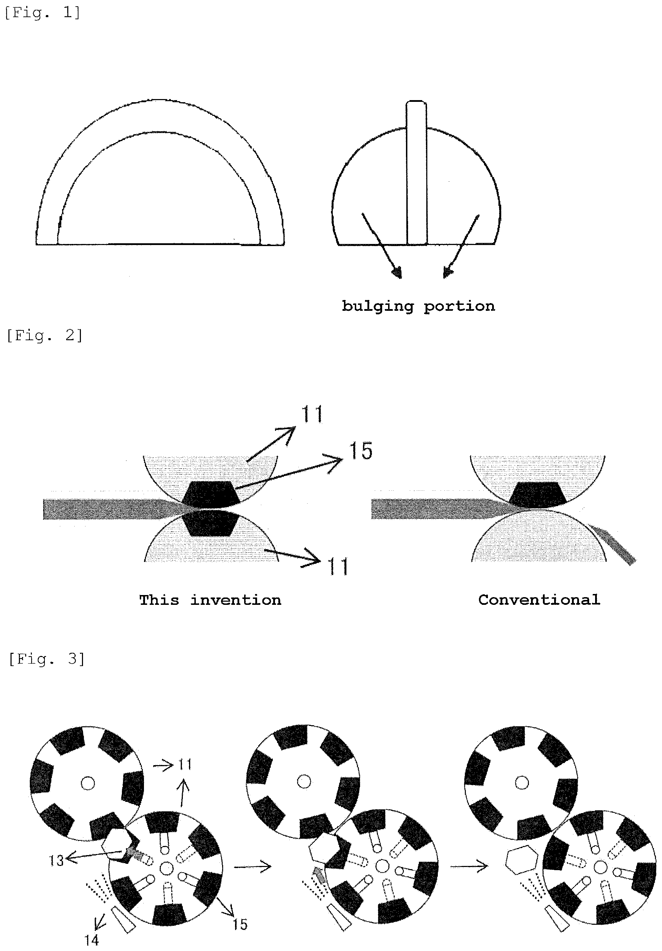

   Fig. 1 is a diagram showing the "bulging portions" in a "filled food product having bulging portions on both sides" taking a gyoza as an example. The left figure is a view of a filled food product having bulging portions on both sides as viewed from the side, and the right figure is a view of a filled food product having bulging portions on both sides as viewed from the front.
[Fig. 2]
   Fig. 2 is a conceptual diagram comparing embodiments of taking out a formed filled food product/gyoza in each case of using the filled food product-forming apparatus of the present invention and using a conventional gyoza forming apparatus.
[Fig. 3]
   Fig. 3 is a conceptual diagram showing over time an embodiment in which the formed filled food product is detached from the roller section of the apparatus when the filled food product-forming apparatus of the present invention is used. The left figure shows a state in which the formed filled food product is lifted from a recess of the roller, the middle figure shows a state in which the formed filled food product is being detached from the roller, and the right figure shows a state in which detaching of the formed filled food product has been completed.
[Fig. 4A]

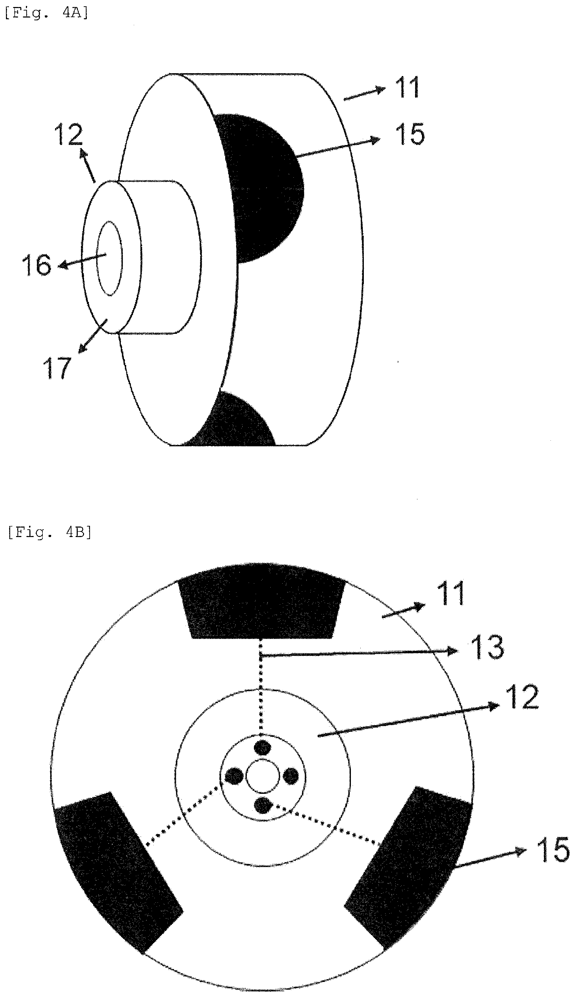

   Fig. 4A is a conceptual diagram showing an example of an embodiment in which a roller is connected to a rotating portion of a rotary joint attached to a side surface of the roller.
[Fig. 4B]
   Fig. 4B is an example of a front view of an embodiment in which a roller is connected to a rotating portion of a rotary joint attached to a side surface of the roller.
[Fig. 4C]

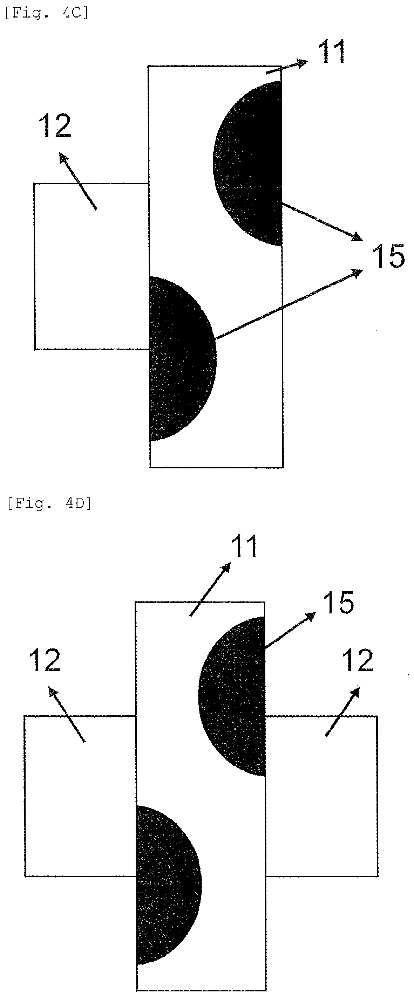

   Fig. 4C is an example of a side view of an embodiment in which a roller is connected to a rotating portion of a rotary joint attached to a side surface of the roller.
[Fig. 4D]
   Fig. 4D is an example of a side view of an embodiment in which a roller is connected to rotating portions of rotary joints attached to both side surfaces of the roller.
[Fig. 5]

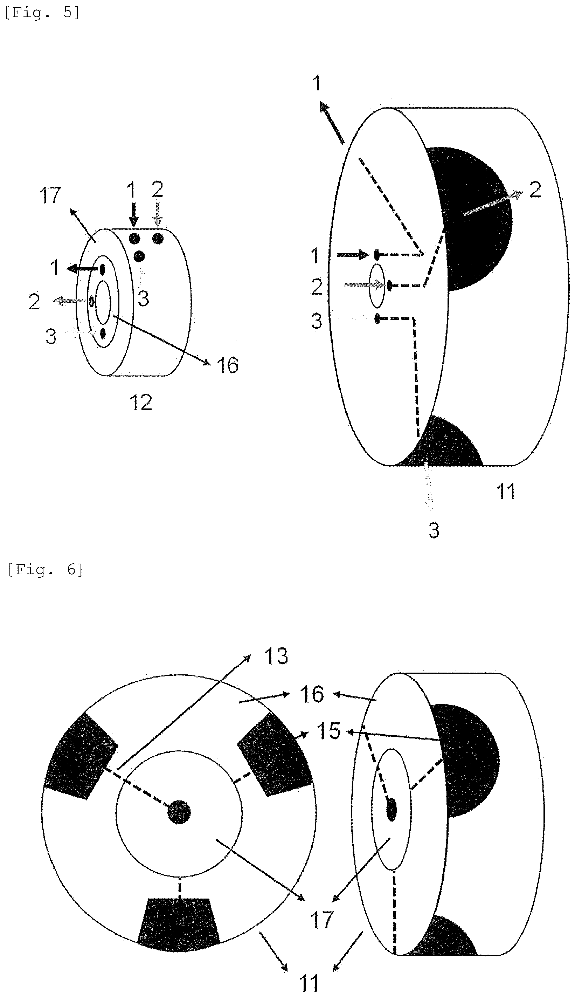

   Fig. 5 is a diagram illustrating an example of the flow of air when the ventilation holes of a roller having ventilation holes in each recess are connected to a rotary joint.
[Fig. 6]
   Fig. 6 is a conceptual diagram showing an example of an embodiment of a roller with no rotary joint attached to a side surface. The left figure is a view as seen from the front, and the right figure is a view as seen obliquely from the side.
[Fig. 7]

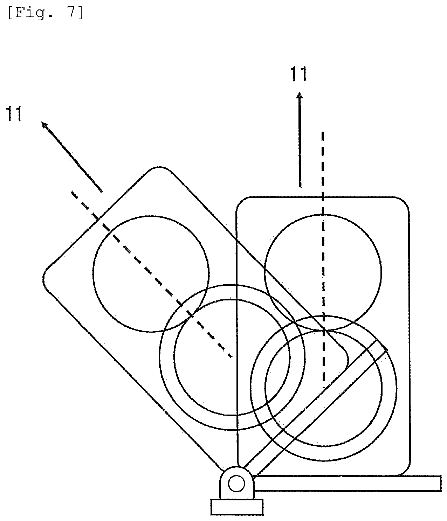

   Fig. 7 is a diagram showing a part of an example of a filled food product-forming apparatus in which a line connecting the respective center points of two rollers is arranged in the vertical direction and a part of an example of a filled food product-forming apparatus in which the line connecting the respective center points is arranged to incline at an angle of 30 to 60° from the vertical direction, superimposed on each other.

### [Description of Embodiments]

### 1. Filled food product-forming apparatus

The present invention provides a filled food product-forming apparatus having a roller section composed of two rollers, wherein the aforementioned two rollers rotate in mutually opposite directions while being in face-to-face contact at cylindrical roll portions, and a filled food product having bulging portions on both sides is formed by rotation of the aforementioned two rollers, wherein each of the aforementioned two rollers has recesses for accommodating the aforementioned bulging portion of the aforementioned filled food product at one or more positions facing each other during rotation of the rollers,
one of the aforementioned two rollers has ventilation holes for sending air to each recess, and
an air nozzle for sending air is provided at an outlet for the aforementioned formed filled food product from the aforementioned roller section (hereinafter also referred to as "the apparatus of the present invention").

In the present specification, a "filled food product" refers to a food having at least a filling (generally also referred to as "an") and an outer skin (dough) covering the filling. Among others, a filled food product whose outer skin is hydrated and therefore has strong adhesiveness and is difficult to detach from a roller is preferred from the viewpoint that the apparatus of the present invention can be more effectively utilized. Examples of the filled food products include a filled food product having an outer skin containing, for example, 15 wt% to 50 wt%, preferably 15 wt% to 45 wt%, more preferably 15 wt% to 40 wt%, further preferably 20 wt% to 35 wt%, and still more preferably 20 wt% to 30 wt% moisture. Specific examples include gyoza, shumai, xiaolongbao, wonton, spring roll, baozi, and the like, and among them, gyoza is more preferred from the viewpoint that the apparatus of the present invention can be more effectively utilized.

In the present specification, the "bulging portion" when referring to "a filled food product having bulging portions on both sides" indicates, in the case of gyoza, for example, the portion shown in Fig. 1, which is filled with a filling and has a bulge, and also indicates similar portions for filled food products other than gyoza.

The apparatus of the present invention can be used for continuous production of filled food products having bulging portions on both sides. In addition, the filled food product before forming, which is applied to the apparatus of the present invention, can be prepared by a method known per se, and has, for example, a form in which a filling is wrapped in a cylindrical outer skin.

The "recess" possessed by each roller is not particularly limited as long as it is a recess capable of accommodating a formed filled food product having bulging portions on both sides, and the shape of the recess can be appropriately adjusted by a method known per se depending on the shape and the like of the desired filled food products having bulging portions on both sides.

Hereinafter the apparatus of the present invention and the effects thereof are described with reference to the drawings.

Fig. 2 is a conceptual diagram comparing embodiments of taking out a formed filled food product/gyoza in each case of using the filled food product-forming apparatus of the present invention and using a conventional gyoza-forming apparatus.

In the conventional gyoza-forming apparatus (right side of Fig. 2), one of the two rollers has no recess and is flat, and only the other roller has recesses for accommodating a bulging portion on one side of the filled food product, and by using the apparatus, a gyoza having a bulging portion only on one side is obtained. In addition, a scraper for detaching the formed gyoza is provided at an outlet for the formed gyoza from the roller section. By providing the scraper on the side of the roller having no recess and being flat, the scraper fits with the flat surface of the formed gyoza and helps the formed gyoza detach from the roller section.

On the other hand, in the filled food product-forming apparatus of the present invention (left side of Fig. 2), each of the two rollers has recesses for accommodating each of the bulging portions on both sides of a filled food product, at positions facing each other during rotation of the rollers, and the filled food product having bulging portions on both sides is pushed out from the rollers. Therefore, a scraper for detaching cannot be used, and a new mechanism for detaching is required.

Fig. 3 is a conceptual diagram showing over time an embodiment in which a formed filled food product is detached from the roller section of the apparatus when the filled food product-forming apparatus of the present invention is used. The left figure shows a state in which the formed filled food product is lifted from a recess of the roller by air sent from a ventilation hole that one of the two rollers has in the recess. The middle figure shows a state in which the lifted formed filled food product is being detached from the roller by air sent from an air nozzle provided at an outlet from the roller section. The right figure shows a state in which detaching of the formed filled food product from the roller section has been completed.

The apparatus of the present invention is configured such that a formed filled food product having bulging portions on both sides is easily detached from the roller section by air sent from both the above-mentioned ventilation hole and air nozzle. That is, it is a filled food product-forming apparatus that has overcome the conventional problem and can easily detach a filled food product having bulging portions on both sides after formation thereof.

Here, it is preferable that the ventilation holes provided in each recess of one of the two rollers are configured to send air to the aforementioned each recess only when the recesses of the two rollers face each other during rotation of the two rollers and immediately before the formed filled food product is detached from the roller section.

In one embodiment of the apparatus of the present invention, one or more of the two rollers are connected to a rotating portion of a rotary joint attached to a side surface of the roller. In particular, it is preferable that, of the two rollers, at least the roller having ventilation holes in respective recesses is connected to a rotating portion of a rotary joint attached to a side surface of the roller.

In the present specification, the "rotary joint" means a joint having a rotating portion at the center and a fixed portion around it, and having a structure in which, when attached to a side surface of a roller, the rotating portion is connected to the roller, and the rotating portion and the roller rotate together.

A conceptual diagram of one example of an embodiment in which a roller is connected to a rotating portion of a rotary joint attached to a side surface of the roller is shown in Fig. 4A, examples each for a front view and a side view of the embodiment are shown in Fig. 4B and Fig. 4C, respectively, and an example of a side view of an embodiment in which a roller is connected to rotating portions of rotary joints attached to both side surfaces of the roller is shown in Fig. 4D.

Furthermore, in one embodiment of the apparatus of the present invention, the ventilation holes provided in the roller having the ventilation holes for sending air to each recess are connected to the rotating portion of the rotary joint.

A diagram explaining one example of the flow of air at this time is shown in Fig. 5.

As shown in Fig. 5, air passing through the passage of symbol 1 in the rotary joint is sent to the recess of the roller through the passage of symbol 1 in the roller. Similarly, air passing through the passage of symbol 2 in the rotary joint is sent to the recess of the roller through the passage of symbol 2 in the roller, and air passing through the passage of symbol 3 in the rotary joint is sent to the recess of the roller through the passage of symbol 3 in the roller. Therefore, in this example, by controlling the flow of air on the rotary joint side, it is possible to control such that air is sent to recesses of each roller only immediately before the formed filled food product is detached from the roller section during rotation of two rollers.

In another embodiment of the apparatus of the present invention, no rotary joint is attached to the side surface of the roller.

A conceptual diagram of one example of the embodiment of the roller at this time is shown in Fig. 6.

In this example, the roller has a fixed portion at the center and a rotating portion around it. In addition, in this example, only when the rotating portion rotates and the ventilation hole possessed by the roller in each recess is present at a position matching the outlet of the air passage in the fixed portion, air is sent from the ventilation hole to the recess.

Furthermore, in this example, an air passage leading to the ventilation hole exists in a sliding portion of the interface between the rotating portion and the fixed portion. On the other hand, in the embodiment described above in which the roller is connected to the rotating portion of the rotary joint attached to the side surface of the roller, there is no air passage leading to the ventilation hole possessed by the roller in each recess in the sliding portion of the interface between the rotating portion and the fixed portion of the rotary joint. Therefore, it can be said that the embodiment in which the roller is connected to the rotating portion of the rotary joint attached to the side surface of the roller is a more preferred embodiment because the risk of foreign matter contamination from the sliding portion of the interface between the rotating portion and the fixed portion is expected to be smaller.

In one embodiment of the apparatus of the present invention, a line connecting the respective center points of the two rollers is inclined at an angle of 30 to 60° from the vertical direction, and the roller provided with the air nozzle is configured to be on the lower side.

In the present specification, the "center point of the roller" indicates the center point of the rotation axis of the roller.

Fig. 7 is a diagram showing a part of an example of a filled food product-forming apparatus in which a line connecting the respective center points of two rollers is arranged in the vertical direction and a part of an example of a filled food product-forming apparatus in which the line connecting the respective center points is arranged to incline at an angle of 30 to 60° from the vertical direction, superimposed on each other. The aforementioned Fig. 3 is also a conceptual diagram of a filled food product-forming apparatus in which a line connecting the respective center points of the two rollers is arranged to incline at an angle of about 45° from the vertical direction.

By inclining the line connecting the respective center points of the two rollers at an angle of 30 to 60° from the vertical direction, detaching of the formed filled food product from the roller section becomes easier.

### 2. Method for producing filled food product

The present invention also provides a method for producing a filled food product having bulging portions on both sides, comprising a step of by using the apparatus of the present invention, sending air to the formed filled food product having bulging portions on both sides from the ventilation hole provided in each recess of one of the two rollers, and sending air from the air nozzle provided at the outlet for the formed filled food product from the roller section (hereinafter also referred to as "the production method of the present invention").

Both the sending of air from the ventilation hole possessed in each recess by one of the two rollers (hereinafter also referred to as "Sending 1") and the sending of air from the air nozzle provided at the outlet for the formed filled food product from the roller section (hereinafter also referred to as "Sending 2") are performed for detaching the formed filled food product having bulging portions on both sides from the roller section. These may be performed at any timing such as performing them simultaneously, performing Sending 2 immediately after Sending 1, performing Sending 2 only during the latter half of the period in which Sending 1 is being performed, and the like.

The air sending speed, air sending amount, and the like during Sending 1 and during Sending 2 can each be appropriately adjusted according to the type, weight, and the like of the formed filled food product having bulging portions on both sides to be detached.

For example, the amount of air sent during Sending 1 is preferably 1 L/min/g of filled food product to 2 L/min/g of filled food product, and the amount of air sent during Sending 2 is preferably 6 L/min/g of filled food product to 12 L/min/g of filled food product. When the amount of air sent during Sending 1 is 1 L/min/g of filled food product or more, and when the amount of air sent during Sending 2 is 6 L/min/g of filled food product or more, the formed filled food product is more easily detached, which is preferable. When the amount of air sent during Sending 1 is 2 L/min/g of filled food product or less, and when the amount of air sent during Sending 2 is 12 L/min/g of filled food product or less, the formed filled food product is less likely to be blown away, which is preferable.

In the production method of the present invention, steps other than the above-mentioned step can be performed according to each method known for producing filled food products, or in accordance therewith.

### [Industrial Applicability]

According to the present invention, a filled food product-forming apparatus and the like capable of easily detaching filled food products having bulging portions on both sides, such as gyoza, after formation thereof can be provided. Therefore, the present invention is useful in the food industry field.

This application is based on a patent application No. 2024-010723 filed in Japan (filing date: January 29, 2024), the contents of which are incorporated in full herein.

### [Explanation of Symbols]

11 roller
12 rotary joint
13 ventilation hole
14 air nozzle
15 recess
16 rotating portion
17 fixed portion

## Claims

1. A filled food product-forming apparatus having a roller section composed of two rollers, wherein the two rollers rotate in mutually opposite directions while being in face-to-face contact at cylindrical roll portions, and a filled food product having bulging portions on both sides is formed by rotation of the two rollers, wherein
each of the two rollers has recesses for accommodating the bulging portion of the filled food product at one or more positions facing each other during rotation of the rollers,
one of the two rollers has ventilation holes for sending air to each recess, and
an air nozzle for sending air is provided at an outlet for the formed filled food product from the roller section.

2. The apparatus according to claim 1, wherein the ventilation holes provided in each recess of one of the two rollers are configured to send air to the each recess only when the recesses of the two rollers face each other during rotation of the two rollers and immediately before the formed filled food product is detached from the roller section.

3. The apparatus according to claim 1, wherein one or more of the two rollers are connected to a rotating portion of a rotary joint attached to a side surface of the roller.

4. The apparatus according to claim 3, wherein the ventilation holes provided in the roller having ventilation holes for sending air to each recess are connected to the rotating portion of the rotary joint.

5. The apparatus according to claim 1, wherein a line connecting the respective center points of the two rollers is inclined at an angle of 30 to 60° from the vertical direction, and the roller having ventilation holes for sending air to each recess is configured to be positioned on the lower side.

6. The apparatus according to any one of claims 1 to 5, wherein the filled food product comprises at least a filling and an outer skin covering the filling, and the outer skin contains 15 wt% to 50 wt% moisture.

7. The apparatus according to any one of claims 1 to 5, wherein the filled food product is a gyoza.

8. A method for producing a filled food product having bulging portions on both sides, comprising a step of by using the apparatus according to any one of claims 1 to 5, sending air to the formed filled food product having bulging portions on both sides from the ventilation hole provided in each recess of one of the two rollers, and sending air from the air nozzle provided at the outlet for the formed filled food product from the roller section.

9. The production method according to claim 8, wherein an amount of air sent when sending air from the ventilation hole provided in each recess of one of the two rollers is 1 L/min/g of the filled food product to 2 L/min/g of the filled food product, and an amount of air sent when sending air from the air nozzle is 6 L/min/g of the filled food product to 12 L/min/g of the filled food product.

10. The production method according to claim 8, wherein the filled food product has at least a filling and an outer skin covering the filling, and the outer skin contains 15 wt% to 50 wt% moisture.

11. The production method according to claim 8, wherein the filled food product is a gyoza.
